# EUROPEAN PATENT SPECIFICATION

(11) **EP 2 488 369 B1**
(45) Date of publication and mention of the grant of the patent: **19.03.2014**
(21) Application number: 10771612.8
(22) Date of filing: 15.10.2010
(51) Int. Cl.: B41M 5/26

(54) **SUB-SURFACE MARKING OF PRODUCT HOUSINGS**
KENNZEICHNUNG VON PRODUKTGEHÄUSEN UNTER DER OBERFLÄCHE
MARQUAGE DE SOUS-SURFACE DE BOÎTIERS DE PRODUIT

(30) Priority: 16.10.2009 US 252623 P; 21.12.2009 US 643772 P; 30.09.2010 US 895384 P
(43) Date of publication of application: 22.08.2012
(60) Divisional application: 14154872.7
(73) Proprietor: Apple Inc., Cupertino, CA 95014 (US)
(72) Inventor: NASHNER, Michael, Cupertino, CA 95014 (US)
(74) Representative: Gillard, Matthew Paul
(86) International application number: PCT/US2010/052931
(87) International publication number: WO 2011/047325

(56) References cited:
- EP-A1- 0 997 958
- WO-A1-01/34408
- WO-A1-98/53451
- US-A- 4 547 649

## Description

### BACKGROUND OF THE INVENTION

### Field of the Invention

The present invention relates to marking products and, more particularly, marking outer housing surfaces of electronic devices.

### Description of the Related Art

Consumer products, such as electronic devices, have been marked with different information for many years. For example, it is common for electronic devices to be marked with a serial number, model number, copyright information and the like. Conventionally, such marking is done with an ink printing or stamping process. Although conventional ink printing and stamping is useful for many situations, such techniques can be inadequate in the case of handheld electronic devices. The small form factor of handheld electronic devices, such as mobile phones, portable media players and Personal Digital Assistants (PDAs), requires that the marking be very small. In order for such small marking to be legible, the marking must be accurately and precisely formed. Unfortunately, however, conventional techniques are not able to offer sufficient accuracy and precision. Thus, there is a need for improved techniques to mark products.

WO0134408 discloses a method of marking a surface of an element which comprises a substrate of aluminium or an alloy thereof and an anodized outer layer. The substrate and the anodized outer layer are formed of the same material.

### SUMMARY OF THE INVENTION

The invention pertains to techniques or processes for providing markings on products. In one embodiment, the products have housings and the markings are to be provided on sub-surfaces of the housings. For example, a housing for a particular product can include an outer housing surface and the markings can be provided on a sub-surface the outer housing surface yet still be visible from the outside of the housing. Since the markings are beneath the surface of the housing, the markings are durable. The markings provided on products can be textual and/or graphic. The markings can be formed with high resolution. The markings are also able to be dark, even on metal surfaces.

In general, the markings (also referred to as annotations or labeling) provided on products according to the invention can be textual and/or graphic. The markings can be used to provide a product (e.g., a product's housing) with certain information. The marking can, for example, be use to label the product with various information. When a marking includes text, the text can provide information concerning the product (e.g., electronic device). For example, the text can include one or more of: name of product, trademark or copyright information, design location, assembly location, model number, serial number, license number, agency approvals, standards compliance, electronic codes, memory of device, and the like). When a marking includes a graphic, the graphic can pertain to a logo, a certification mark, standards mark or an approval mark that is often associated with the product. The marking can be used for advertisements to be provided on products. The markings can also be used for customization (e.g., user customization) of a housing of a product.

The invention can be implemented in numerous ways, including as a method, system, device, or apparatus. Several embodiments of the invention are discussed below.

As a method for marking an article, one embodiment can, for example, include at least providing a metal structure for the article, the metal structure being a multi-layered structure; anodizing at least a first surface of an outer layer of the multi-layered structure to form an outer surface; and subsequently altering surface characteristics of selective portions of an inner unanodized surface of the metal structure, wherein the outer layer of the multi-layered structure is formed of a first metal, and an inner layer of the multi-layered structure is formed of a second metal, the second metal being different than the first metal.. In one embodiment, the altering of the surface characteristics can be performed by directing a laser output through the anodized first surface of the metal structure towards the inner unanodized surface of the metal structure.

As an electronic device housing, one embodiment of the invention can, for example, include at least a housing structure that includes at least an outer portion and an inner portion, the outer portion being anodized and the inner portion being unanodized; and selectively altered surface regions on a surface of the inner portion adjacent the outer portion, wherein the altered surface regions provide predetermined marking of the electronic device housing, wherein the outer portion of the housing structure comprises a first metal, and wherein the inner portion of the housing structure comprises a second metal, the second metal being different than the first metal.

As a housing arrangement, one embodiment of the invention can, for example, include a base metal layer, an additional layer, the additional layer having a first bonding surface and a first exterior surface, the first bonding surface being bonded in direct contact with a first surface of the base metal layer, the first exterior surface being an exterior of the housing arrangement; and sub-surface marking indicia formed on the first surface of the base metal layer, wherein the additional layer is formed of a first metal, and the base metal layer is formed of a second metal, the second metal being different than the first metal.

Other aspects and advantages of the invention will become apparent from the following detailed description taken in conjunction with the accompanying drawings which illustrate, by way of example, the principles of the invention.

### BRIEF DESCRIPTION OF THE DRAWINGS

The invention will be readily understood by the following detailed description in conjunction with the accompanying drawings, wherein like reference numerals designate like structural elements, and in which:
FIG. 1 is a diagram of a marking state machine according to one embodiment of the invention.
FIG. 2 is an illustration of a substrate having sub-surface alterations 202 according to one embodiment.
FIG. 3 is a flow diagram of a marking process according to one embodiment.
FIGs. 4A-4C are diagrams illustrating marking of a metal structure according to one embodiment.
FIG. 4D is a table illustrating exemplary laser operation parameters for marking the metal structure according to one embodiment.
FIG. 4E is a diagram further illustrating exemplary laser operation parameters for marking the metal structure according to one embodiment.
FIGs. 4F-4H are diagrams of various views representative of two-hundred times magnification photomicrographs of marking the metal structure according to one embodiment.
FIG. 4I is a diagram of a top view representative of a two-hundred times magnification photomicrograph of marking the metal structure according to another embodiment.
FIG. 5 is a flow diagram of a multi-stage marking process according to another embodiment.
FIG. 6 is a flow diagram of a marking process according to one embodiment.
FIGs. 7A-7D are diagrams illustrating marking of a metal structure according to one embodiment.
FIG. 8 is a flow diagram of a multi-stage marking process according to another embodiment.
FIG. 9 is a flow diagram of a multi-stage marking process according to still another embodiment.
FIG. 10A is a diagrammatic representation of an exemplary housing 1000 on which a mask is to be placed.
FIG. 10B is a diagrammatic representation of the same exemplary housing shown in FIG. 10A after a mask has been placed over an exposed stainless steel surface in accordance with one embodiment.
FIG. 11 illustrates the product housing having markings according to one exemplary embodiment.

### DETAILED DESCRIPTION OF EMBODIMENTS OF THE INVENTION

The invention pertains to techniques or processes for providing markings on products. In one embodiment, the products have housings and the markings are to be provided on sub-surfaces of the housings. For example, a housing for a particular product can include an outer housing surface and the markings can be provided on a sub-surface the outer housing surface yet still be visible from the outside of the housing. Since the markings are beneath the surface of the housing, the markings are durable. The markings provided on products can be textual and/or graphic. The markings can be formed with high resolution. The markings are also able to be dark, even on metal surfaces.

In general, the markings (also referred to as annotations or labeling) provided on products according to the invention can be textual and/or graphic. The markings can be used to provide a product (e.g., a product's housing) with certain information. The marking can, for example, be use to label the product with various information. When a marking includes text, the text can provide information concerning the product (e.g., electronic device). For example, the text can include one or more of: name of product, trademark or copyright information, design location, assembly location, model number, serial number, license number, agency approvals, standards compliance, electronic codes, memory of device, and the like). When a marking includes a graphic, the graphic can pertain to a logo, a certification mark, standards mark or an approval mark that is often associated with the product. The marking can be used for advertisements to be provided on products. The markings can also be used for customization (e.g., user customization) of a housing of a product.

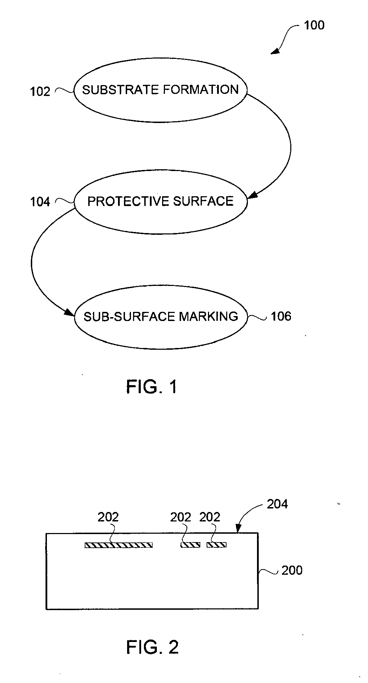

Exemplary embodiments of the invention are discussed below with reference to FIGs. 1 - 11. However, those skilled in the art will readily appreciate that the detailed description given herein with respect to these figures is for explanatory purposes as the invention extends beyond these limited embodiments.

FIG. 1 is a diagram of a marking state machine 100 according to one embodiment of the invention. The marking state machine 100 reflects three (3) basic states associated with marking an electronic device. Specifically, the marking can mark a housing of an electronic device, such as a portable electronic device.

The marking state machine 100 includes a substrate formation state 102. At the substrate formation state 102, a substrate can be obtained or produced. For example, the substrate can represent at least a portion of a housing surface of an electronic device. Next, the marking state machine 100 can transition to a protective surface state 104. At the protective surface state 104, a protective surface can be formed or applied to at least one surface of the substrate. The protective surface can be used to protect the surface of the substrate. For example, the protective surface can be a more durable surface than that of the surface. Next, the marking state machine 100 can transition to a sub-surface marking state 106. At the sub-surface marking state 106, marking can be produced on a sub-surface of the substrate. In particular, the sub-surface marking can be performed on the substrate below the protective surface. The protective surface is typically substantially translucent to allow the sub-surface marking to be visible through the protective surface. The marking can be provided with high resolution and can be protected. Since the marking is provided on a sub-surface, the marking is not only protected but also has the cosmetic advantage of not being perceptible of tactile detection on the surface.

FIG. 2 is an illustration of a substrate 200 having sub-surface alterations 202 according to one embodiment. The sub-surface alterations 202 are provided below an outer surface 204 of the substrate 200. Given that the outer surface 204 is typically substantially translucent (e.g., clear), the sub-surface alterations 202 are visible by a user through the outer surface 204. Accordingly, the sub-surface alterations 202 can provide markings on the substrate 200. Since the markings are provided by the sub-surface alterations 202, the markings are protected by the outer surface 204.

The substrate 200 can represent at least a portion of a housing of an electronic device. The marking being provided to the substrate can provide text and/or graphics to an outer housing surface of a portable electronic device. The marking techniques are particularly useful for smaller scale portable electronic devices, such as handheld electronic devices. Examples of handheld electronic devices include mobile telephones (e.g., cell phones), Personal Digital Assistants (PDAs), portable media players, remote controllers, pointing devices (e.g., computer mouse), game controllers, etc.

The marking is, in one embodiment, particularly well-suited for applying text and/or graphics to a housing of an electronic device. As noted above, the substrate can represent a portion of a housing of an electronic device. Examples of electronic devices, namely, handheld electronic devices, include mobile telephones (e.g., cell phones), Personal Digital Assistants (PDAs), portable media players, remote controllers, pointing devices (e.g., computer mouse), game controllers, etc.

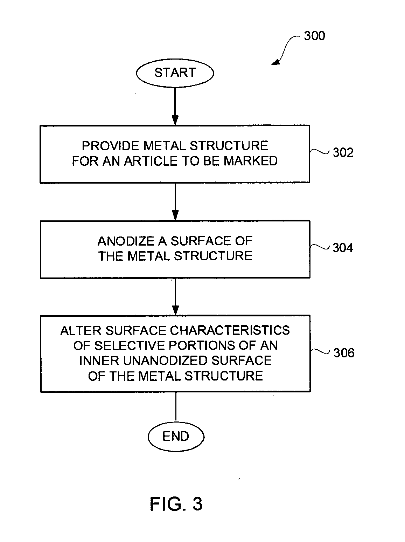

FIG. 3 is a flow diagram of a marking process 300 according to one embodiment. The marking process 300 can be performed on an electronic device that is to be marked. The marking process 300 is, for example, suitable for applying text or graphics to a housing (e.g., an outer housing surface) of an electronic device. The marking can be provided such that it is visible to users of the electronic device. However, the marking can be placed in various different positions, surfaces or structures of the electronic device.

The marking process 300 can provide 302 a metal structure for an article to be marked. The metal structure can pertain to a metal housing for an electronic device, such as a portable electronic device, to be marked. The metal structure can be formed of one metal layer. The metal structure can also be formed of multiple layers of different materials, where at least one of the multiple layers is a metal layer. The metal layer can, for example, be or include aluminum, titanium, niobium or tantalum.

After the metal structure has been provided 302, a surface of the metal structure can be anodized 304. Typically, the surface of the metal structure to be anodized 304 is an outer or exposed metal surface of the metal structure. The outer or exposed surface typically represents an exterior surface of the metal housing for the electronic device. Thereafter, surface characteristics of selected portions of an inner unanodized surface of the metal structure can be altered 306. The inner unanodized surface can be part of the metal layer that was anodized, or part of another layer that was not anodized. The surface characteristics can be altered 306 using a laser, such as an infrared wavelength laser (e.g., picosecond pulsewidth infrared laser or nanosecond pulsewidth infrared laser). For example, one specific suitable laser is a six (6) Watt infrared wavelength picosecond pulsewidth laser at 1000 KHz with a scan speed of 50mms⁻¹ (mm/sec). While such picosecond pulsewidth laser may provide many advantages, it may be more expensive than an alternative nanosecond pulsewidth laser. Accordingly, an example of a suitable alternative laser is a ten (10) Watt infrared wavelength nanosecond pulsewidth lasers at 40 KHz with a scan speed of 20mms⁻¹ (mm/sec).

Fluence of pulses of the laser may be selected so as to be approximately less than an ablation threshold fluence that characterizes the metal. Selection of the laser fluence may be for substantially avoiding ablation of the metal. Further, fluence of pulses of the laser may be selected so as to be greater than a damage fluence that characterizes the metal, so as to provide for altering surface characteristics of the selected portions of the inner unanodized surface of the metal structure. Following the block 306, the marking process 300 can end.

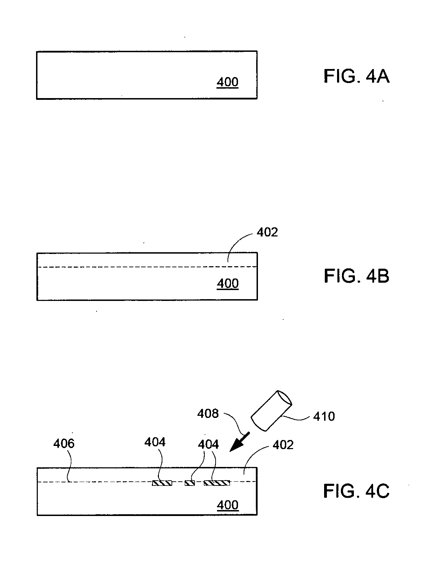

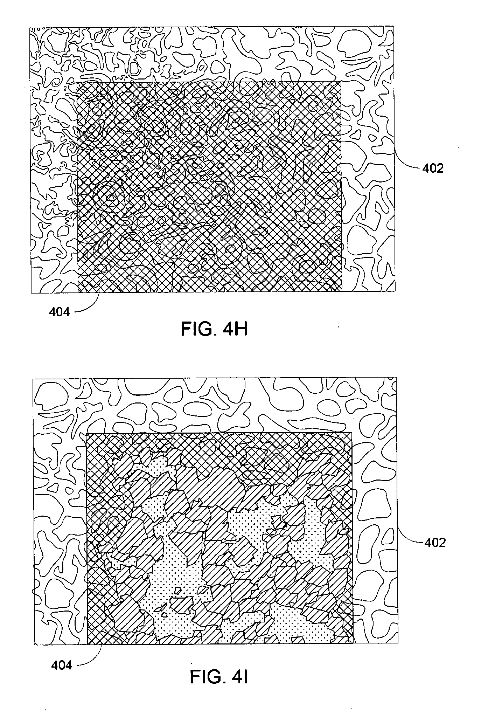

FIGs. 4A-4C are diagrams illustrating marking of a metal structure according to one embodiment. FIG. 4A illustrates a base metal structure 400. As an example, the base metal structure 400 can be formed of aluminum, titanium, niobium or tantalum. FIG. 4B illustrates the base metal structure 400 after an upper surface has been anodized to form an anodized surface 402. The thickness of the anodized surface 402 can, for example, be about 5-20µm (microns). After the anodized surface 402 has been formed on the base metal structure 400, FIG. 4C illustrates altered surfaces 404 being selectively formed on an inner unanodized surface 406. The altered structures 404 are formed by optical energy 408 produced by a laser 410 (e.g., infrared wavelength laser). The altered surfaces 404 combine to provide marking of the metal structure. For example, the altered surfaces 404 appear to be black and thus when selectively formed can provide marking. The resulting marking is visible through the anodized surface 402 which can be substantially translucent. If the anodized surface 402 is primarily clear, the resulting marking can be appear as black. The marking can also be provided in gray scale. If the anodized surface is dyed or colored, the markings may appear in different colors.

Fluence of the optical energy may be above the damage threshold fluence for the base metal structure, for forming the altered structures 404. However, notwithstanding the foregoing, it should be understood that fluence of the optical energy that forms the altered structures 404 on the altered surfaces of the base metal structure may be selected to be approximately below the ablation threshold fluence for the base metal structure, so as to avoid deleterious effects, for example, predominant ablative stripping of the anodized surface from the base metal structure. Further, predominant fracturing of the anodized surface, or predominant delaminating of the anodized surface from the base metal structure, may be substantially avoided by selectively limiting fluence of the optical energy that forms the altered structures. Fluence of the optical energy that forms the altered structures on the altered surfaces of the base metal structure may be selected so that non-ablative laser-material interactions such as heating, surface melting, surface vaporization and/or plasma formation predominate over any ablation. In other words, by exercising due care in selection of the fluence of the optical energy that forms the altered structures on the altered surfaces of the base metal structure; ablation, which may be characterized by direct evaporation the metal, in an explosive boiling that forms a mixture of energetic gases comprising atoms, molecules, ions and electrons, may not predominate over non-ablative laser-material interactions, such as heating, surface melting, surface vaporization and/or plasma formation.

The laser 410 may include a galvanometer mirror or other arrangement for raster scanning a spot of the optical energy over the inner unanodized surface 406, so as to form the altered structures into a rasterized depiction of the marking indicia. Suitable pitch between raster scan lines of the scanning spot may be selected. For example, a suitable pitch may be a fine pitch of about thirteen (13) microns. The laser may further include optics for contracting or expanding size of the spot of the optical energy, by focusing or defocusing the spot. Expanding size of the spot, by defocusing the spot may be used to select fluence of the optical energy. In particular, expanding size of the spot may select fluence of the optical energy below the ablation threshold fluence for the base metal structure. Spot size of the optical energy for the nanosecond class laser mentioned previously herein may be within a range from approximately fifty (50) µm (microns) to approximately one hundred (100) µm (microns); and spot size may be about seventy (70) µm (microns).

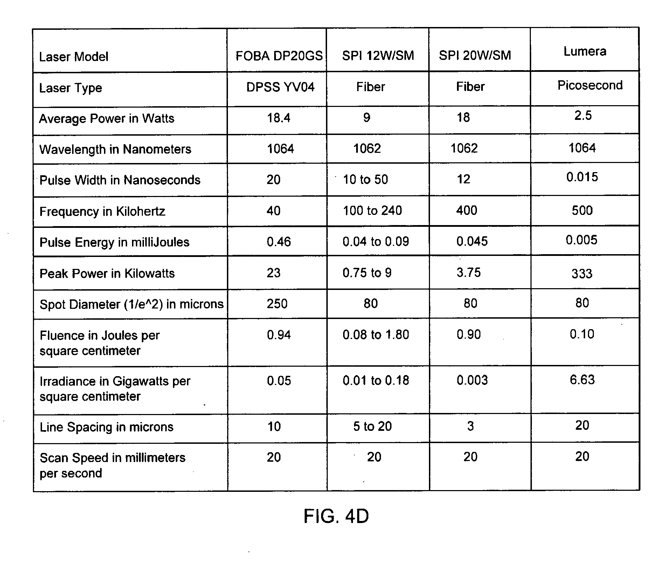

FIG. 4D is a table illustrating exemplary laser operation parameters for marking the metal structure according to one embodiment. In particular, the table of FIG. 4D shows examples of various suitable laser models which may be used for marking the metal structure. The FOBA (RTM) DP20GS is a Diode Pumped Solid State Neodymium-Doped Yttrium Orthovanadate (DPSS YVO4) type laser, which is available from FOBA (RTM)Technology and Services GmbH, having offices at 159 Swanson Road, Boxborough, Massachusetts. The SPI 12W/SM AND SPI20W/SM are fiber type lasers, which are available from SPI (RTM) Lasers UK, having offices at 4000 Burton Drive, Santa Clara, California. The Lumera (RTM) is a picosecond type laser, which is available from LUMERA (RTM) LASER GmbH, having an office at Opelstr 10, 67661 Kaiserslautern, Germany. It should be understood that the table of FIG. 4D shows approximate exemplary laser operating parameters, and that various other laser operating parameters may be selected to provide the fluence of the optical energy that forms the altered structures of the base metal structure, wherein the fluence may be selected to be approximately below the ablation threshold fluence for the base metal structure

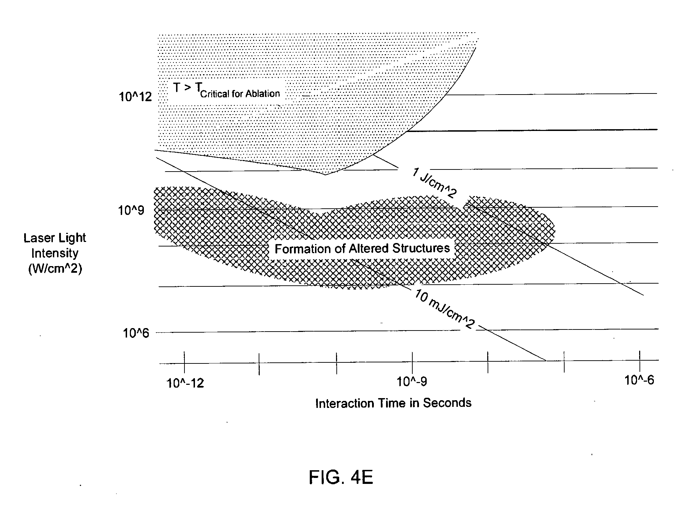

FIG. 4E is a diagram further illustrating exemplary laser operation parameters for marking the metal structure according to one embodiment. In the diagram of FIG. 4E, irradiance of Laser Light Intensity in Watts per square centimeter is shown along a vertical axis, while Interaction Time of each pulse of the laser light (optical energy) with the metal structure is shown in fractions of a second along a horizontal axis. For illustrative reference purposes, diagonal lines of constant fuence of approximately ten (10) milli-Joules per square centimeter and of approximately one (1) Joule per square centimeter are shown in FIG. 4E. For substantially avoiding ablation of the metal structure, excessively high laser light intensity may be avoided, so that a temperature "T" of the metal structure may not substantially exceed a critical temperature for ablation of the metal structure. For example, a stippled region of exemplary excessively high laser light intensity is shown in FIG. 4E, along with a descriptive legend T > T critical for ablation. FIG. 4E further shows a cross hatched region of suggested approximate parameters for formation of the altered structures.

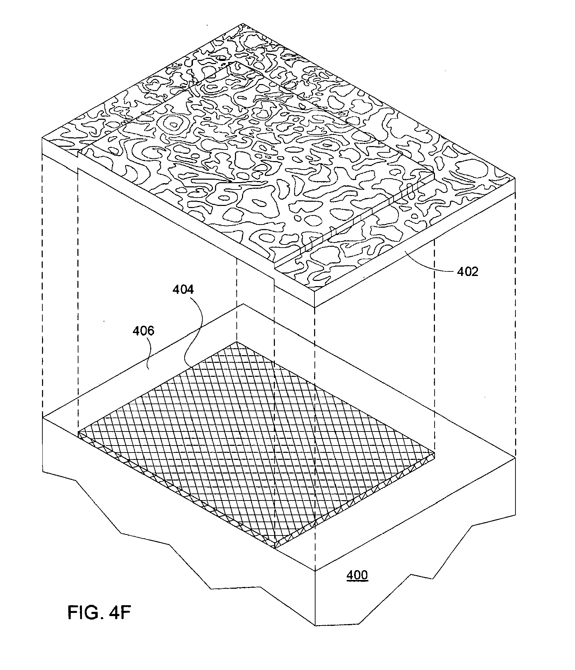

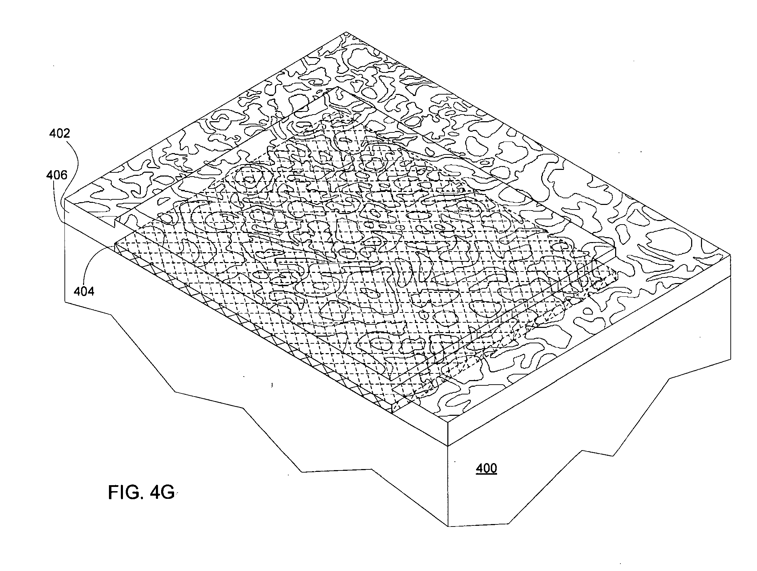

FIGs. 4F-4H are diagrams of various views representative of two-hundred times magnification photomicrographs of marking the metal structure according to one embodiment. In FIG. 4F, the anodized surface 402 is shown exploded away from the inner unanodized surface 406 of the base metal structure 400 in isometric view, so as to show clearly the altered structures 404 (which are particularly highlighted using cross hatching.) The anodized surface 402, the altered structures 404 and the inner unanodized surface 406 of the base metal structure 400 are shown in a collapsed isometric view in FIG 4G, and in a top view in FIG. 4H. The anodized surface 402 may appear substantially optically transparent as shown in FIGs. 4F through 4H, however slight curved island surface features of the anodized surface 402 may be seen under the two-hundred times magnification. Further, FIGS. 4F through 4H show a stepped plateau feature of the anodized surface 402, which may be due to elevation by the altered structures 404, or may be due to an increase in volume contributed by the altered structures 404. A thickness of the stepped plateau feature may be slight, and may be about two to four µm (microns).

FIG. 41 is a diagram of a top view representative of a two-hundred times magnification photomicrograph of marking the metal structure according to another embodiment, which may provide for a matte finish of the anodized surface 402. The anodized surface 402 may appear substantially optically transparent as shown in FIGs. 41, however the slight curved island surface features of the anodized surface 402 may be seen under the two-hundred times magnification, as well as the stepped plateau feature of the anodized surface 402 Further, increasing optical energy of the laser while forming the altered structures 404 may result in some fracturing of the anodized surface 402, and in some delaminating of the anodized surface from the altered structures 404, which are coupled to the base metal structure 400.

In FIG. 41 diagonal hatching highlights portions of anodized surface 402 that have become partially delaminated, but which still remain substantially in place. Under two-hundred times magnification, such partially delaminated portions may appear somewhat opaque, rather than transparent, as in the unfractured regions of the anodized surface 402. Voids are shown as stippled in FIG. 41, where portions of the anodized surface 402 are absent due to being entirely delaminated,. At locations of such voids, the altered structures may lack covering by any anodized surface 402.

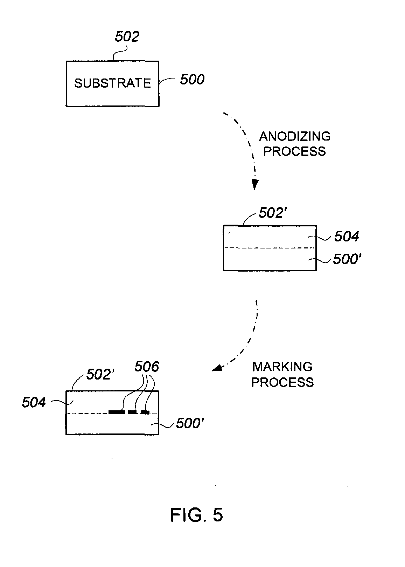

FIG. 5 is a flow diagram of a multi-stage marking process according to another embodiment. As shown in FIG. 5, a substrate 500 can be provided to an anodizing process that causes an anodized surface 504 to be formed on at least one surface of the substrate 500. The substrate 500 includes an exposed surface 502. The anodizing provided by the anodizing process serves to anodize the exposed surface 502. Once anodized, the exposed surface 502 is an anodized exposed surface 502'. After the substrate 500 has been anodized by the anodizing process, the anodized substrate 500' can be provided to a marking process. The marking process operates to produce altered surfaces 506 to the anodized substrate 500' below the anodized exposed surface 502'. The altered surfaces 506 provide the marking to the anodized substrate 500'. By controlling size, placement and/or darkness of the altered surfaces 506, the marking can be selectively provided to the anodized substrate 500'.

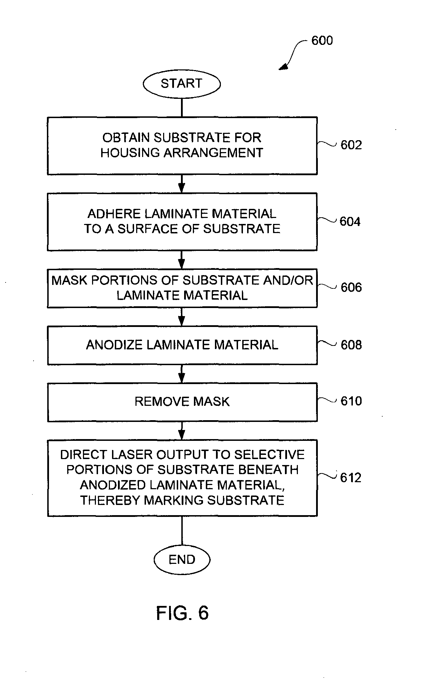

FIG. 6 is a flow diagram of a marking process 600 according to one embodiment. The marking process 600 can, for example, be performed by a marking system that serves to mark an electronic product. The marking process 600 can be performed on an electronic device that is to be marked. The marking process 600 is, for example, suitable for applying text or graphics to a housing (e.g., an outer housing surface) of the electronic device. The marking can be provided such that it is visible to a user of the electronic device. The marking can be placed in various different positions, surfaces or structures of the electronic device.

The marking process 600 can obtain 602 a substrate for a housing arrangement. Here, it is assumed that the electronic product to be marked includes a housing and that such housing is to be marked. After the substrate for the housing arrangement has been obtained 602, a laminate material can be adhered 604 to a surface of the substrate. In this embodiment, the laminate material is adhered 604 to the surface of the substrate to provide strength, cosmetic appeal, etc. For example, if the substrate is a metal, such as stainless steel, then the laminate layer can pertain to aluminum )or other material capable of being anodized).

Next, portions of the substrate can be masked 606. Here, since the substrate is going to undergo an anodization process, those portions of the substrate that are not to be anodized can be masked 606. Masking prevents an anodization to certain surfaces of the substrate or the laminate material adhered to the substrate. After portions of the substrate or laminate material are masked, the laminate material (that is not been masked off) can be anodized 608. Following the anodization, the mask can be removed 610.

Thereafter, laser output from a laser can be directed 612 to selected portions of the substrate beneath the anodized laminate material, thereby marking of the substrate. Consequently, the marking is provided by the altered regions that are below the surface. These altered regions can be induced by the laser output on the surface of the substrate below the laminate material. Following the block 612, the marking process 600 can end since the laser serves to produce altered regions below the outer surface of the laminate material.

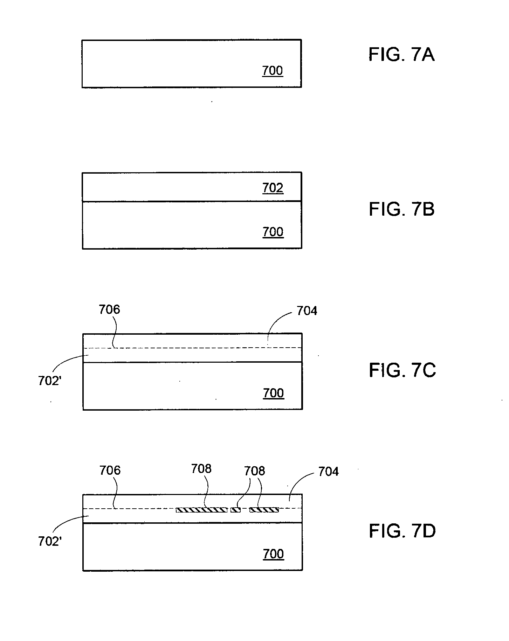

FIGs. 7A-7D are diagrams illustrating marking of a metal structure according to one embodiment. FIG. 7A illustrates a base metal layer 700. The base metal layer 700 can be a metal, such as stainless steel. FIG. 7B illustrates the base metal layer 700 after an outer metal layer 702 is provided on the base metal layer 700. The outer metal layer 702 can be a metal, such as aluminum, titanium, niobium or tantalum. FIG. 7C illustrates the metal structure 700 after the outer metal layer 702 has been anodized to form an anodized layer 704. After the anodized layer 704 has been formed, the outer metal layer 702 includes an outer portion representing the anodized layer 704 and an inner portion representing the unanodized portion of the outer metal layer 702. FIG. 7C also illustrated a representative boundary 706 between the outer portion and the inner portion of the anodized layer 704. Next, FIG. 7D illustrates altered surfaces 708 being selectively formed at the representative boundary 706. For example, the altered surfaces 708 can be formed on the unanodized portion of the outer metal layer 702. The altered structures 704 combine to provide marking of the metal structure. For example, the altered surfaces 708 appear to be black and thus when selectively formed can provide marking. The resulting marking is visible through the anodized surface 702 which can be substantially translucent. If the anodized surface 702 is primarily clear, the resulting marking can be appear as black. The marking can also be provided in gray scale. If the anodized surface is dyed or colored, the markings may appear in different colors.

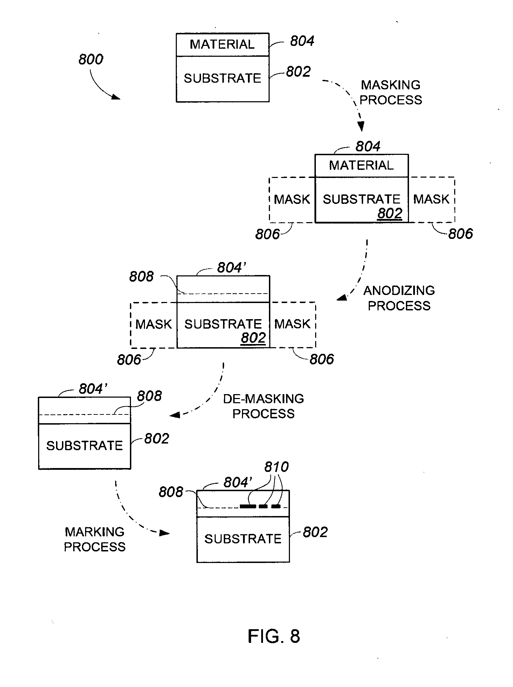

FIG. 8 is a flow diagram of a multi-stage marking process 800 according to another embodiment. The marking process 800 can begin with a substrate 802 representing at least a portion of an article to be marked. As shown in FIG. 8, a substrate 802 can have a layer of material 804 adhered thereto. The layer of material 804 can generally formed from anodizable metals, i.e., metals which may be anodized. In one embodiment, the layer of material 804 can be aluminum, titanium, niobium or tantalum. The substrate 802 can be generally formed from non-anodizable metals, such as stainless steel.

The substrate 802 with the layer of material 804 can be provided to a masking process. At the masking process, portions of the substrate 802 can be "masked off" with mask material 806 that blocks anodization. The masking process generally does not mask off regions of the layer of material 804 but in some circumstances it may be desirable to do so.

After the masking has been completed at the masking process, the substrate 802 having the layer of material 804 and the mask 806 can be provided to an anodizing process. The anodizing process causes at least a portion of the layer of material 804 to be anodized. An anodized layer of material 804' is formed by the anodizing process. The anodized layer of material 804' is typically only anodized part way into the layer of material 804. A boundary 808 is established in the layer of material 804 between the anodized portion and the unanodized portion. The mask material 806 prevents anodization or damage to the substrate 802 during anodization.

Following anodization at the anodizing process, the substrate 802, the anodized layer of material 804' and the mask material 806 are provided to a de-masking process. At the de-masking process, the mask material 806 that was previously applied can now be removed since the anodization has been completed. Hence, following de-masking, the substrate 802 and the anodized layer of material 804' remain.

After the substrate 802 has been masked by the masking process, anodized by the anodizing process and de-masked by the de-masking process, the anodized substrate 802 with the anodized layer of material 804' can be provided to a marking process. At the marking process, the anodized layer of material 804' can be further processed to produce altered surfaces 810 at the boundary 808 in the anodized layer of material 804'. The altered surfaces 810 are thus below the surface of the anodized layer of material 804'. That is, in one embodiment, the altered surfaces 810 are induced into the unanodized portion of the layer of material 804' (i.e., portion below the boundary 808) as shown in FIG. 8. The altered surfaces 810 provide the marking to the layer of material 804. By controlling size, placement and/or darkness of the altered surfaces 810, the marking can be selectively provided to the article utilizing the substrate 802 and the anodized layer of material 804'. However, in an alternative embodiment, the altered surfaces 810 can be additionally or alternatively formed on the surface of the substrate 802 below the layer of material 804'.

The strength associated with stainless steel is generally desirable in the formation of housing walls for portable electronic devices including, but not limited to including, mobile phones (e.g., cell phones), portable digital assistants and digital media players. The stiffness associated with stainless steel is also desirable. However, the cosmetic properties of stainless steel are often lacking. To provide a cosmetic surface for a housing that effectively derives its strength from a stainless steel layer, an anodizable material may be clad to at least one surface of the stainless steel layer and then anodized. In one embodiment, a housing may include a stainless steel core that is substantially sandwiched between two layers of anodized material, e.g., anodized aluminum, which have a relatively high bond strength. The layers of anodized material effectively form cosmetic surfaces for the housing, while the stainless steel core provides structural strength, as well as stiffness, for the housing.

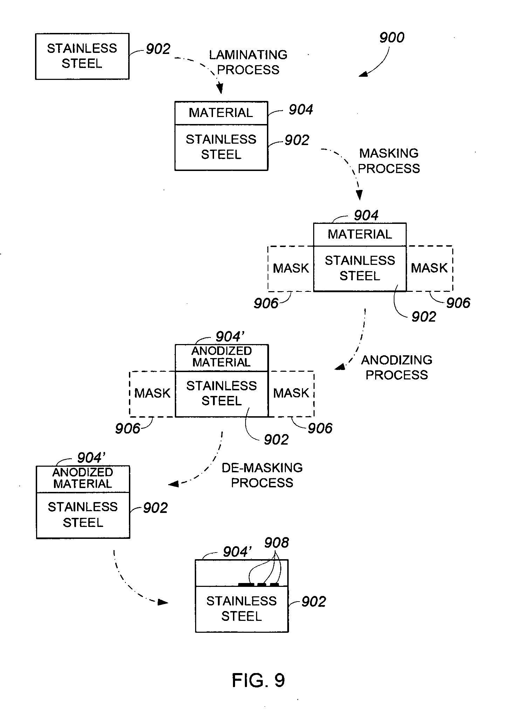

FIG. 9 is a flow diagram of a multi-stage marking process 900 according to still another embodiment. The marking process 900 can begin with a substrate 902 representing at least a portion of an article to be marked. In this embodiment, the substrate 902 is a layer of stainless steel. The substrate 902 can be can be provided to a laminating process. At the laminating process, the substrate 902 can have a layer of material 904 adhered thereto. The layer of material 904 can generally formed from anodizable metals, i.e., metals which may be anodized. In one embodiment, the layer of material 904 can be aluminum, titanium, niobium or tantalum. The layer of material 904 can be adhered to the substrate 904 by directly bonding the layer of material 904 to the substrate 902. For example, a cladding process can be used to bond the layer of material 904 to the substrate. As will be understood by those skilled in the art, a cladding is the bonding of metals substantially without an intermediate bonding agent and substantially without remelting the metals. Cladding may take a variety of different forms including, but not limited to including, standard cladding in which layer of material 904 and substrate 902 are pressed together with roller under high pressure, or fine cladding in which layer of material 904 and substrate 902 are placed in a vacuum and rolled together after a chemical process is performed.

Following the laminating process, the substrate 902 with the layer of material 904 can be provided to a masking process. At the masking process, portions of the substrate 902 can be "masked off" with mask material 906 that blocks anodization. The masking process generally does not mask off regions of the layer of material 904 but in some circumstances it may be desirable to do so.

After the masking has been completed at the masking process, the substrate 902 having the layer of material 904 and the mask 906 can be provided to an anodizing process. The anodizing process causes at least a portion of the layer of material 904 to be anodized. An anodized layer of material 904' is formed by the anodizing process. The anodized layer of material 904' may be anodized fully or part way into the layer of material 904. The mask material 906 prevents anodization or damage to the substrate 902 during anodization.

Following anodization at the anodizing process, the substrate 902, the anodized layer of material 904' and the mask material 906 are provided to a de-masking process. At the de-masking process, the mask material 906 that was previously applied can now be removed since the anodization has been completed. Hence, following de-masking, the substrate 902 and the anodized layer of material 904' remain.

After the substrate 902 has been masked by the masking process, anodized by the anodizing process and de-masked by the de-masking process, the anodized substrate 902 with the anodized layer of material 904' can be provided to a marking process. At the marking process, the anodized layer of material 904' can be further processed to produce altered surfaces 908 on the surface of the substrate 902 below the anodized layer of material 904'. The altered surfaces 908 are thus below the surface of the anodized layer of material 904'. That is, in one embodiment, the altered surfaces 908 are induced into the surface of the substrate 902 beneath at least the anodized portion of the layer of material 904'. The altered surfaces 908 provide the marking to the substrate 902. By controlling size, placement and/or darkness of the altered surfaces 908, the marking can be selectively provided to the article that uses the substrate 902.

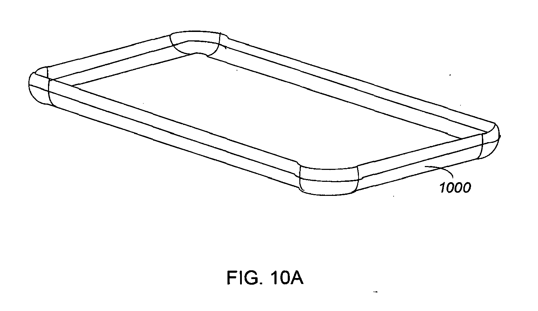

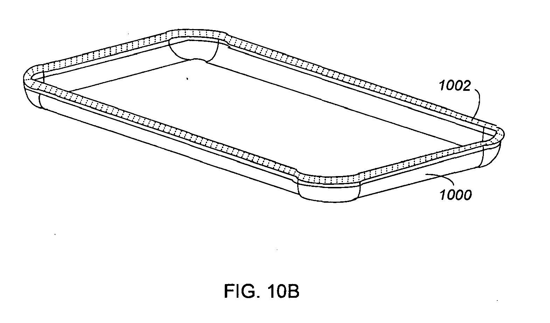

As described above, a substrate to be marked may included areas of exposed stainless steel, or areas in which stainless steel is not substantially covered by a laminant material. Such areas are generally masked prior to an anodizing process to protect the areas of exposed stainless steel from oxidizing or rusting. In one embodiment, an edge of a housing formed from a metal substrate having a laminant material may be masked with a masking material such that substantially only the laminant material, as for example aluminum, is exposed. FIG. 10A is a diagrammatic representation of an exemplary housing 1000 on which a mask is to be placed, and FIG. 10B is a diagrammatic representation of the same exemplary housing 1000 after a mask 1002 has been placed over an exposed stainless steel surface in accordance with an embodiment. The housing 1000 may be a housing that is to be a part of an overall assembly, as for example a bottom of a cell phone assembly or portable media player. As shown in FIG. 10B, the mask 1002 is applied to a top edge of the housing 1000.

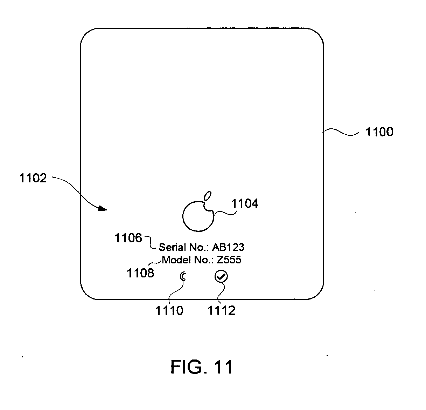

FIG. 11 illustrates the product housing 1100 having markings 1102 according to one exemplary embodiment. The markings 1102 can be produced on a sub-surface of the product housing 1100 in accordance with any of the embodiment discussed above. In this example, the labeling includes a logo graphic 1104, serial number 1106, model number 1108, and certification/approval marks 1110 and 1112.

The marking processes described herein are, for example, suitable for applying text or graphics to a housing surface (e.g., an outer housing surface) of an electronic device. The marking processes are, in one embodiment, particularly well-suited for applying text and/or graphics to an outer housing surface of a portable electronic device. Examples of portable electronic devices include mobile telephones (e.g., cell phones), Personal Digital Assistants (PDAs), portable media players, remote controllers, pointing devices (e.g., computer mouse), game controllers, etc. The portable electronic device can further be a hand-held electronic device. The term hand-held generally means that the electronic device has a form factor that is small enough to be comfortably held in one hand. A hand-held electronic device may be directed at one-handed operation or two-handed operation. In one-handed operation, a single hand is used to both support the device as well as to perform operations with the user interface during use. In two-handed operation, one hand is used to support the device while the other hand performs operations with a user interface during use or alternatively both hands support the device as well as perform operations during use. In some cases, the hand-held electronic device is sized for placement into a pocket of the user. By being pocket-sized, the user does not have to directly carry the device and therefore the device can be taken almost anywhere the user travels (e.g., the user is not limited by carrying a large, bulky and often heavy device).

Additional information on product marking as well as other manufacturing techniques and systems for electronic devices are contained in U.S. Provisional Patent Application No. 61 /059,789, filed June 8, 2008, and entitled "Methods and Systems for Manufacturing an Electronic Device".

Different aspects, embodiments or implementations may, but need not, yield one or more of the following advantages. One advantage of the invention is that durable, high precision markings can be provided to product housings. As an example, the markings being provided on a sub-surface of a product housing that not only have high resolution and durability but also provide a smooth and high quality appearance. Another advantage is that the marking techniques are effective for surfaces that are flat or curved.

## Claims

1. A method for marking an article, comprising:
providing a metal structure (700) for the article, the metal structure (700) being a multi-layered structure;
anodizing at least a first surface of an outer layer (702) of the multi-layered structure (700) to form an outer surface (704); and
subsequently altering surface characteristics of selective portions of an inner unanodized surface of the metal structure (400),
wherein the outer layer (702) of the multi-layered structure is formed of a first metal, and an inner layer of the multi-layered structure is formed of a second metal, the second metal being different than the first metal.

2. A method as recited in claim 1, wherein the altering of the surface characteristics comprises directing a laser output through the anodized first surface (704) of the metal structure (700) towards the inner unanodized surface (702') of the metal structure (700).

3. A method as recited in claim 2, wherein the laser is one of a nanosecond infrared laser and a picosecond pulsewidth infrared laser.

4. A method as recited in claim 1, wherein at least the first surface of the metal structure (700) comprises aluminum.

5. A method as recited in claim 1, wherein the article is a portable electronic device and the metal structure (700) is at least a portion of a housing (1000) for the portable electronic device.

6. A method as recited in claim 1, wherein the inner unanodized surface (702') corresponds to a surface of or within the outer layer of the multi-layered structure (700).

7. A method as recited in claim 6, wherein the inner unanodized surface (702') corresponds to a surface of the inner layer of the multi-layered structure.

8. A method as recited in claim 1, wherein the first metal comprises aluminum, and wherein the second metal comprises stainless steel.

9. A method as recited in any of claims 1-8, wherein the article is marked by the altered surface characteristics of the selective portions (708) of the inner unanodized surface (702') of the metal structure (700) which cause one or more textual or graphical indicia (1102) to appear on the metal structure (700).

10. An electronic device housing, comprising:
a housing structure (1000) including at least an outer portion (702) and an inner portion, the outer portion being anodized and the inner portion being unanodized; and
selectively altered surface regions (708) on a surface of the inner portion adjacent the outer portion,
wherein the altered surface regions provide predetermined marking of the electronic device housing (1000),
wherein the outer portion (702) of the housing structure (1000) comprises a first metal, and wherein the inner portion of the housing structure (1000) comprises a second metal, the second metal being different than the first metal.

11. An electronic device housing as recited in claim 10, wherein the altered surface regions (708) are formed on the surface of the inner portion adjacent the outer portion (702) after the outer portion has been anodized without noticeable disturbance to the anodized outer portion.

12. An electronic device housing as recited in claim 10, wherein the altered surface regions (708) on the surface of the inner portion adjacent the outer portion are altered through the outer portion that is anodized.

13. An electronic device housing as recited in claim 12, wherein the altered surface regions (708) are formed on the surface of the inner portion by a laser output through the outer portion that has been anodized.

14. An electronic device housing as recited in claim 13, wherein the laser is one of a nanosecond pulsewidth infrared laser and a picosecond pulsewidth infrared laser.

15. An electronic device housing as recited in any of claims 10-14, wherein the altered surface regions (708) cause one or more textual or graphical indicia (1102) to appear on the housing structure (1000).

16. An electronic device housing as recited in claim 15, wherein at least the outer portion (702) of the housing structure (1000) comprises aluminum.

17. An electronic device housing as recited in claim 15, wherein the first metal is aluminum, and wherein the second metal is stainless steel.

18. A housing arrangement comprising:
a base metal layer (700);
an additional layer (702), the additional layer having a first bonding surface and a first exterior surface, the first bonding surface being bonded in direct contact with a first surface of the base metal layer, the first exterior surface being an exterior of the housing arrangement; and
sub-surface marking indicia (708) formed on the first surface of the base metal layer,
wherein the additional layer is formed of a first metal, and the base metal layer is formed of a second metal, the second metal being different than the first metal.

19. A housing arrangement as recited in claim 18, wherein the first exterior surface is anodized prior to forming the sub-surface marking indicia (708).

20. A housing arrangement as recited in claim 18 or19, wherein the subsurface marking indicia (708) provide predetermined marking of the housing arrangement.

## Patentansprüche

1. Verfahren zum Markieren eines Artikels, umfassend:
Vorsehen einer Metallstruktur (700) für den Artikel, wobei die Metallstruktur (700) eine vielschichtige Struktur ist;
Anodisieren zumindest einer ersten Fläche einer äußeren Schicht (702) der vielschichtigen Struktur (700), um eine äußere Fläche (704) zu bilden; und
anschließend Ändern der Flächeneigenschaften von ausgewählten Teilen einer inneren, nicht anodisierten Fläche der Metallstruktur (400)
wobei die äußere Schicht (702) der vielschichtigen Struktur aus einem ersten Metall gebildet ist und eine innere Schicht der vielschichtigen Struktur aus einem zweiten Metall gebildet ist,
wobei das zweite Metall sich von dem ersten Metall unterscheidet.

2. Verfahren nach Anspruch 1, wobei das Ändern der Flächeneigenschaften ein Ausrichten einer Laserausgabe durch die anodisierte erste Fläche (704) der Metallstruktur (700) in Richtung der inneren, nicht anodisierten Fläche (702') der Metallstruktur (700) umfasst.

3. Verfahren nach Anspruch 2, wobei der Laser einer der Folgenden ist: Nanosekunden-Infrarotlaser und ein Pikosekunden-Pulsbreiteninfrarotlaser.

4. Verfahren nach Anspruch 1, wobei zumindest die erste Fläche der Metallstruktur (700) Aluminium umfasst.

5. Verfahren nach Anspruch 1, wobei der Artikel eine tragbare elektronische Vorrichtung ist und die Metallstruktur (700) zumindest einen Teil eines Gehäuses (1000) für die tragbare elektronische Vorrichtung ist.

6. Verfahren nach Anspruch 1, wobei die innere, nicht anodisierte Fläche (702') mit einer Fläche des oder innerhalb der äußeren Schicht der vielschichtigen Struktur (700) korrespondiert.

7. Verfahren nach Anspruch 6, wobei die innere, nicht anodisierte Fläche (702') mit einer Fläche der inneren Schicht der vielschichtigen Struktur korrespondiert.

8. Verfahren nach Anspruch 1, wobei das erste Metall Aluminium umfasst und wobei das zweite Metall Edelstahl umfasst.

9. Verfahren nach irgendeinem der Ansprüche 1 bis 8, wobei der Artikel markiert wird durch die geänderten Flächeneigenschaften der ausgewählten Teile (708) der inneren, nicht anodisierten Fläche (702') der metallischen Struktur (700), welche veranlasst, dass ein oder mehrere textliche oder grafische Anhaltspunkte (1102) auf der metallischen Struktur (700) erscheinen.

10. Ein elektronisches Gerätegehäuse, umfassend:
eine Gehäusestruktur (1000), die zumindest einen äußeren Teil (702) und einen inneren Teil beinhaltet, wobei der äußere Teil anodisiert worden ist und der innere Teil nicht anodisiert worden ist; und
wahlweise geänderte Flächenbereiche (708) auf einer Fläche der inneren Teile benachbart zu dem äußeren Teil,
wobei die geänderten Flächenbereiche vorbestimmte Markierungen des elektronischen Gerätegehäuses (1000) vorsehen,
wobei der äußere Teil (702) der Gehäusestruktur (1000) ein erstes Metall umfasst und wobei der innere Teil der Gehäusestruktur (1000) ein zweites Metall umfasst, wobei das zweite Metall sich von dem ersten Metall unterscheidet.

11. Elektronisches Gerätegehäuse nach Anspruch 10, wobei die geänderten Flächenbereiche (708) auf der Oberfläche des inneren Teils benachbart zu dem äußeren Teil (702) gebildet werden, nachdem der äußere Teil anodisiert worden ist, ohne deutliche Störung des anodisierten äußeren Teils.

12. Elektronisches Gerätegehäuse nach Anspruch 10, wobei die geänderten Flächenbereiche (708) auf der Fläche des inneren Teils benachbart zu dem äußeren Teil durch den äußeren Teil, der anodisiert ist, geändert werden.

13. Elektronisches Gerätegehäuse nach Anspruch 12, wobei die geänderten Flächenbereiche (708) auf der Fläche des inneren Teils durch einen Laserausgabe durch den äußeren Teil, der anodisiert worden ist, gebildet werden.

14. Elektronisches Gerätegehäuse nach Anspruch 13, wobei der Laser einer der Folgenden ist: ein Nanosekunden-Pulsbreiteninfrarotlaser und ein Pikosekunden-Pulsbreiteninfrarotlaser.

15. Elektronisches Gerätegehäuse nach irgendeinem der Ansprüche 10 bis 14, wobei die geänderten Flächenbereiche (708) veranlassen, dass ein oder mehrere textliche oder grafische Anhaltspunkte (1102) auf der Gehäusestruktur (1000) erscheinen.

16. Elektronisches Gerätegehäuse nach Anspruch 15, wobei zumindest der äußere Teil (702) der Gehäusestruktur (1000) Aluminium umfasst.

17. Elektronisches Gerätegehäuse nach Anspruch 15, wobei das erste Metall Aluminium ist und wobei das zweite Metall Edelstahl ist.

18. Eine Gehäuseanordnung umfassend:
eine Basismetallschicht (700);
eine zusätzliche Schicht (702), wobei die zusätzliche Schicht eine erste Verbundfläche und eine erste äußere Fläche hat, wobei die erste Verbundfläche in direktem Kontakt mit einer ersten Fläche der Basismetallschicht verbunden ist, wobei die erste äußere Fläche ein Äußeres der Gehäuseanordnung ist; und
Untergrundmarkieranhaltspunkte (708) gebildet auf der ersten Oberfläche der Basismetallschicht, wobei die zusätzliche Schicht aus einem ersten Metall gebildet ist, und die Basismetallschicht aus einem zweiten Metall gebildet ist, wobei das zweite Metall sich von dem ersten Metall unterscheidet.

19. Gehäuseanordnung nach Anspruch 18, wobei die erste äußere Fläche anodisiert ist, bevor die Untergrundmarkieranhaltspunkte (708) gebildet werden.

20. Gehäuseanordnung nach Anspruch 18 oder 19, wobei die Untergrundmarkieranhaltspunkte (708) vorbestimmte Markierung der Gehäuseanordnung vorsehen.

## Revendications

1. Un procédé de marquage d'un article, comprenant :
la mise à disposition d'une structure métallique (700) pour l'article, la structure métallique (700) étant une structure multicouche ;
l'anodisation d'au moins une première surface d'une couche extérieure (702) de la structure multicouche (700) pour former une surface externe (704) ; et
l'altération subséquente de caractéristiques de surface de parties sélectives d'une surface non anodisée interne de la structure métallique (400),
dans lequel la couche externe (702) de la structure multicouche est formée d'un premier métal, et une couche interne de la structure multicouche est formée d'un second métal, le second métal étant différent du premier métal.

2. Un procédé selon la revendication 1, dans lequel l'altération des caractéristiques de surface comprend l'envoi d'une puissance laser au travers de la première surface anodisée (704) de la structure métallique (700) en direction de la surface non anodisée interne (702') de la structure métallique (700).

3. Un procédé selon la revendication 2, dans lequel le laser est l'un d'entre un laser infrarouge nanoseconde et un laser infrarouge à largeur d'impulsion picoseconde.

4. Un procédé selon la revendication 1, dans lequel au moins la première surface de la structure métallique (700) comprend de l'aluminium.

5. Un procédé selon la revendication 1, dans lequel l'article est un dispositif électronique portable et la structure métallique (700) est au moins une partie d'un boitier (1000) pour le dispositif électronique portable.

6. Un procédé selon la revendication 1, dans lequel la surface non anodisée interne (702') correspond à une surface de, ou au sein de, la couche interne de la structure multicouche (700).

7. Un procédé selon la revendication 6, dans lequel la surface non anodisée interne (702') correspond à une surface de la couche interne de la structure multicouche.

8. Un procédé selon la revendication 1, dans lequel le premier métal comprend de l'aluminium, et dans lequel le second métal comprend de l'acier inoxydable.

9. Un procédé selon l'une des revendications 1 à 8, dans lequel l'article est marqué par les caractéristiques de surface altérées des parties sélectives (708) de la surface non anodisée interne (702') de la structure métallique (700) qui font en sorte de faire apparaitre un ou plusieurs indices textuels ou graphiques (1102) sur la structure métallique (700).

10. Un boitier de dispositif électronique, comprenant :
une structure de boitier (1000) comprenant au moins une partie externe (702) et une partie interne, la partie externe étant anodisée et la partie interne étant non anodisée ; et
des régions de surface sélectivement altérées (708) sur une surface de la partie interne adjacente à la partie externe,
dans lequel les régions de surface altérées assurent un marquage prédéterminé du boitier du dispositif électronique (1000),
dans lequel la partie externe (702) de la structure de boitier (1000) comprend un premier métal, et dans lequel la partie interne de la structure de boitier (1000) comprend un second métal, le second métal étant différent du premier métal.

11. Un boitier de dispositif électronique selon la revendication 10, dans lequel les régions de surface altérées (708) sont formées sur la surface de la partie interne adjacente à la partie externe (702) après que la partie externe a été anodisée sans perturbation visible de la partie extérieure anodisée.

12. Un boitier de dispositif électronique selon la revendication 10, dans lequel les régions de surface altérées (708) sur la surface de la partie interne adjacente à la partie externe sont altérées au travers de la partie externe qui est anodisée.

13. Un boitier de dispositif électronique selon la revendication 12, dans lequel les régions de surface altérées (708) sont formées sur la surface de la partie interne par une puissance laser au travers de la partie externe qui a été anodisée.

14. Un boitier de dispositif électronique selon la revendication 13, dans lequel le laser est l'un d'entre un laser infrarouge à largeur d'impulsion nanoseconde et un laser infrarouge à largeur d'impulsion picoseconde.

15. Un boitier de dispositif électronique selon l'une des revendications 10 à 14, dans lequel les régions de surface altérées (708) font en sorte qu'apparaissent sur la structure de boitier (1000) un ou plusieurs indices textuels ou graphiques (1102).

16. Un boitier de dispositif électronique selon la revendication 15, dans lequel au moins la partie externe (702) de la structure du boitier (1000) comprend de l'aluminium.

17. Un boitier de dispositif électronique selon la revendication 15, dans lequel le premier métal est l'aluminium, et dans lequel le second métal est de l'acier inoxydable.

18. Une configuration de boitier comprenant :
une couche métallique de base (700) ;
une couche additionnelle (702), la couche additionnelle possédant une première surface de liaison et une première surface extérieure, la première surface de liaison étant liée en contact direct avec une première surface de la couche métallique de base, la première surface extérieure étant un extérieur de la configuration de boitier ; et
des indices de marquage en subsurface (708) formés sur la première surface de la couche métallique de base,
dans laquelle la couche additionnelle est formée d'un premier métal, et la couche métallique de base est formée d'un second métal, le second métal étant différent du premier métal.

19. Une configuration de boitier selon la revendication 18, dans laquelle la première surface extérieure est anodisée avant la formation des indices de marquage en subsurface (708).

20. Une configuration de boitier selon l'une des revendications 18 ou 19, dans laquelle les indices de marquage en subsurface (708) forment un marquage prédéterminé de la configuration de boitier.
